# EUROPÄISCHE PATENTSCHRIFT

(11) **EP 0 775 380 B1**
(45) Veröffentlichungstag und Bekanntmachung des Hinweises auf die Patenterteilung: **23.09.1998**
(21) Anmeldenummer: 95929020.6
(22) Anmeldetag: 27.07.1995
(51) Int. Cl.: H02J 13/00, H04B 3/54

(54) **FERNWIRKSYSTEM MIT DATENÜBERTRAGUNG ÜBER DIE SCHIRMUNG VON ENERGIEÜBERTRAGUNGSKABELN**
TELECONTROL SYSTEM WITH DATA TRANSMISSION VIA THE SHIELDING OF POWER TRANSMISSION CABLES
SYSTEME DE TELECOMMANDE AVEC TRANSMISSION DE DONNEES AU MOYEN DU BLINDAGE DE CABLES DE TRANSPORT D'ENERGIE

(30) Priorität: 10.08.1994 EP 94112540
(43) Veröffentlichungstag der Anmeldung: 28.05.1997
(73) Patentinhaber: SIEMENS AKTIENGESELLSCHAFT, 80333 München (DE)
(72) Erfinder: GLAS, Vitus, D-90768 Fürth (DE); MOCK, Werner, D-90762 Fürth (DE); SCHEMITZEK, Erich, D-90480 Nürnberg (DE)
(86) Internationale Anmeldenummer: EP9502990
(87) Internationale Veröffentlichungsnummer: WO9605644

(56) Entgegenhaltungen:
- EP-A- 0 092 750
- EP-A- 0 201 253
- EP-A- 0 231 457
- FR-A- 2 674 996
- PATENT ABSTRACTS OF JAPAN, vol. 16, no. 316 (E-1231), 10. Juli 1992 & JP-A-04 090 231 (KYUSHU ELECTRIC POWER), 24. März 1992

## Beschreibung

Die Erfindung betrifft ein Fernwirksystem zur Überwachung von Betriebsmitteln in einem Energieversorgungsnetz, die insbesondere in Netzpunkten an Kabelstrecken angeschlossen sind, welche zur Energieübertragung dienen. Als Betriebsmittel in diesen Netzpunkten können z.B. Einspeisetransformatoren, Abzweigtransformator, Leistungsschalter, Wandler u.dgl. vorgesehen sein.

Fernwirksysteme kann die Aufgabe zugewiesen werden, den Betriebszustand eines Energieversorgungsnetzes zu überwachen und gegebenenfalls Steuermaßnahmen insbesondere in Form von in ganz bestimmten Netzpunkten auf die Betriebsmittel des Netzes einwirkende Schalthandlungen auszulösen. Zur Überwachung muß zyklisch der Betriebszustand, d.h. der "Status", von allen zum Energieversorgungsnetz gehörigen Kabelstrecken und von in Netzpunkten meist an den Kabelenden angeschlossenen Betriebsmitteln erfaßt werden. So muß zum einen eine Überwachung erfolgen, ob alle Kabelstrecken zur Energieübertragung zur Verfügung stehen oder ob einzelne Kabelstrecken ausgefallen sind. Ferner ist es notwendig, ständig den aktuellen Betriebszustand z.B. von Transformatoren und Leistungsschaltern zu erfassen, welche als Betriebsmittel in Netzpunkten an den Enden der zur Energieübertragung dienenden Kabelstrecken angeschlossen sind. Schließlich hat ein Fernwirksystem in der Regel die Aufgabe, Steuerbefehle an diese Betriebsmittel zu senden und anschließend zu überwachen, ob sich der Betriebszustand des angesprochenen Betriebsmittels in der durch den Steuerbefehl beabsichtigten Weise und in dem dafür vorgesehenen Zeitraum verändert hat.

Bei Fernwirksystemen erfolgt die Überwachung aller Kabelstrecken und dazugehöriger Betriebsmittel zyklisch, d.h. die Abfrage von deren Betriebszustand wird nach Ablauf von festen Zeiträumen ständig wiederholt. Dabei besteht das Problem, daß die Wiederholungsrate für derartige Überwachungszyklen nicht zu klein sein darf, d.h. daß zum einen der Zeitraum zwischen dem Beginn und dem positiven Abschluß einer Überwachung aller Kabelstrecken und Betriebsmittel, und zum anderen der Zeitraum bis zum erneuten Start eines Überwachungszyklusses nicht zu groß sein dürfen. Andernfalls wäre die Steuerbarkeit des Energieversorgungsnetzes über das Fernwirksystem eingeschränkt. Wären nämlich die obengenannten Zeiträume zu lang, so könnte z.B. die Wirkung eines zwischen zwei Überwachungszyklen an ein Betriebsmittel abgeschickten Schaltbefehles nur verzögert in einem der folgenden Überwachungszyklen bei der Erfassung von dessen aktuellem Status beobachtet werden. Für den Fall, daß die durch einen Schaltbefehl gewünschte Statusänderung des Netzbetriebsmittels nicht eingetreten ist, könnte die Auswirkung von wiederholten Schaltversuchen wiederum erst mit Ablauf von weiteren Überwachungszyklen beobachtet werden.

Der Erfindung liegt die Aufgabe zugrunde, ein Fernwirksystem so auszugestalten, daß zum einen eine Überwachung aller Kabelstrecken und Betriebsmittel eines Energieversorgungsnetzes mit einer hohen Wiederholungsrate möglich ist, also der aktuelle "Status" eines jeden Teiles des Energieversorgungsnetzes schnell vom Fernwirksystem beobachtet werden kann. Zum anderen soll es die Gestaltung des Fernwirksystemes ermöglichen, trotzdem größere Datenmengen in Form von sogenannten Statusinformationen möglichst ohne Beeinträchtigung an Schnelligkeit und Datensicherheit zum Fernwirksystem zu übertragen. Die Dauer eines Überwachungszyklusses soll somit möglichst kurz sein.

Die Aufgabe wird gelöst mit dem im Patentanspruch angegebenen Fernwirksystem. Vorteilhafte Ausführungsformen der Erfindung sind in den Unteransprüchen enthalten. Die Erfindung wird anhand eines in den nachfolgend kurz angeführten Figuren dargestellten, bevorzugten Ausführungsbeispieles näher erläutert. Dabei zeigt:
- FIG 1: das Blockschaltbild eines Teiles eines Energieversorgungsnetzes, und die zur Überwachung und Steuerung dazugehöriger Kabelstrecken und daran angeschlossener Betriebsmittel dienenden Teile des erfindungsgemäßen Fernwirksystemes,
- FIG 2: das Beispiel eines Orts- und Zeitdiagrammes für beispielhaft einen sogenannten Kurzabfragezyklus, während dem sich Statusänderungen bei beispielhaft zwei angeschlossenen Betriebsmitteln ereignen,
- FIG 3: das Beispiel eines Orts- und Zeitdiagrammes für einen sogenannten Kurzabfragezyklus, während dem sich keine Statusänderungen bei den angeschlossenen Betriebsmitteln ereignen,
- FIG 4: das Beispiel eines Orts- und Zeitdiagrammes für einen sogenannten Kettenabfragezyklus, bei dem zum Zwecke einer Initialisierung der Status aller Betriebsmittel abgefragt wird, und
- FIG 5: das Beispiel eines Orts- und Zeitdiagrammes für einen sogenannten Testabfragezyklus, womit bei einer Störung die letzte, funktionsfähige Unterstation in der Kette ermittelt wird.

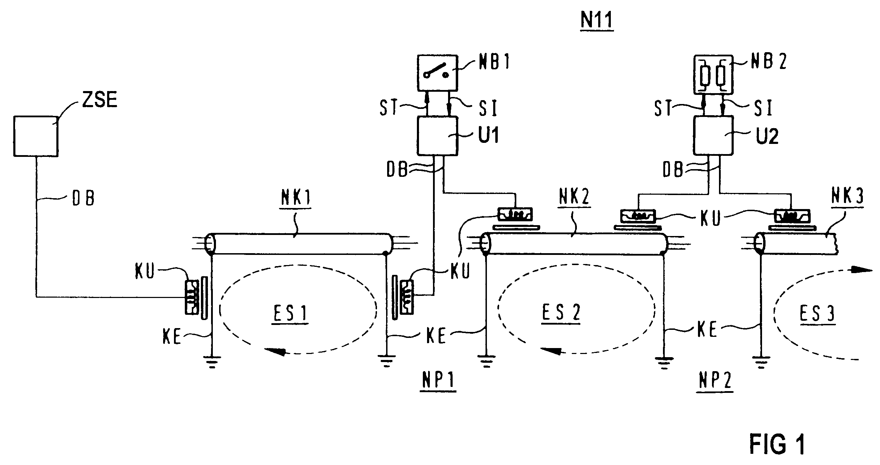

In FIG 1 ist beispielhaft ein linienförmiger Netzbereich N11 eines Energieversorgungsnetzes dargestellt, welches z.B. zur Versorgung von Städten bzw. Stadtteilen geeignet ist. Es sind eine Vielzahl zur Energieübertragung dienender Kabelstrecken vorhanden, von denen in FIG. 1 beispielhaft die Kabelstrecken NK1,NK2,NK3 dargestellt sind. Jede Kabelstrecke weist an den Enden jeweils eine Kabelschirmerdung KE auf. Die hierdurch über den jeweiligen Kabelschirm und Bezugserde gebildeten Erdstromkreise sind im Beispiel der FIG. 1 in Form von jeweils einem strichlierten Oval ES1,ES2,ES3 dargestellt. Die Enden der Kabelstrecken sind in Netzpunkten über Betriebsmittel miteinander verbunden. Im Beispiel der FIG 1 sind der Netzpunkt NP1 zwischen den benachbarten Kabelstrecken NK1,NK2 und der Netzpunkt NP2 zwischen den benachbarten Kabelstrecken NK2,NK3 beispielhaft dargestellt. Dem Netzpunkt NP1 ist das Betriebsmittel NB1 zugeordnet, welches als Verbindungsmittel der Enden der benachbarten Kabelstrecken NK1,NK2 dient. Dieses ist symbolisch als ein Leistungsschalter dargestellt. In entsprechender Weise verbindet im Netzpunkt NP1 das Netzbetriebsmittel NB2 beispielhaft in Form eines Transformators die Enden der benachbarten Kabelstrecken NK2,NK3.

Das Fernwirksystem gemäß der Erfindung weist eine Zentralsteuereinheit mit einem Datenbus und mindestens einer Kette von daran in Reihe anschließbaren Unterstationen auf. Jede der Unterstationen ist bevorzugt einem Netzpunkt zugeordnet und mit dem dortigen Betriebsmittel zu dessen Überwachung und Steuerung verbunden. Erfindungsgemäß weist das Fernwirksystem einen Datenbus auf, der bevorzugt mittels Koppelübertragern jeweils an den Enden der Kabelstrecken am geerdeten Kabelschirm angeschlossen ist. Mittels der Koppelübertrager wird eine Dateneinspeisung bzw. Datenauskopplung in die bzw. aus den Erdstromkreisen benachbarter Kabelstrecken bewirkt. Vorteilhaft sind somit die Schirme der u.U. relativ langen Kabelstrecken des Energieversorgungsnetzes gleichzeitig ein Teil des die Unterstationen des Fernwirksystemes mit der Zentralsteuereinheit verbindenden Datenbusses.

Diese Gestaltung des Fernwirksystemes ist in FIG. 1 beispielhaft dargestellt. Dabei ist die aus den Unterstationen U1 und U2 bestehende Kette von Unterstationen über einen Datenbus DB in Reihe miteinander verbunden und an eine Zentralsteuereinheit ZSE angeschlossen. Jede Unterstation ist im jeweiligen Netzpunkt NP1,NP2 mit dem dortigen Betriebsmittel NB1,NB2 zur Überwachung und Steuerung verbunden. In FIG. 1 sind hierzu beispielhaft von der jeweiligen Unterstation zum Betriebsmittel gehende Steuerleitungen ST, und vom Betriebsmittel zur Unterstation gehende Signalleitungen SE dargestellt. Über die Steuerleitungen ST können Steuerbefehle an das Betriebsmittel weitergegeben werden, welche von der Zentralsteuereinheit SE in den Datenbus DB eingespeist und von der jeweiligen Unterstation empfangen wurden. Über die Signalleitungen SI können den aktuellen Betriebszustand des angeschlossenen Betriebsmittels kennzeichnende Statusinformationen von der jeweiligen Unterstation gelesen und an die Zentralsteuereinheit ZSE gerichtet in den Datenbus DB eingespeist werden.

Vorteilhaft weist der Datenbus DB Koppelübertrager KU auf. So ist z.B. die Datenschnittstelle am Ausgang der Zentralsteuereinheit ZSE über einen Koppelübertrager KU mit einem Ende des geerdeten Kabelschirmes KE der Kabelstrecke NK1 verbunden. Ferner ist in FIG. 1 die erste Unterstation U1 der Kette über je einen Koppelübertrager KU mit den zugewandten Enden der geerdeten Kabelschirme KE der benachbarten Kabelstrecken NK1,NK2 verbunden. Schließlich ist im Netzpunkt NP2 die zweite Unterstation U2 über je einen Koppelübertrager KU mit den zugewandten Enden der geerdeten Kabelschirme KE der benachbarten Kabelstrecken NK2,NK3 verbunden. In der gleichen Weise kann die Reihe der Unterstationen durch einen weiteren, von dem in FIG. 1 nicht dargestellten anderen Ende des geerdeten Kabelschirmes der Kabelstrecke NK3 abgehende Koppelübertrager verlängert werden. Beispielhaft sind in der Praxis bis zu 12 Unterstationen U1...U12 zu einer Kette in Reihe zusammengeschaltet, wobei die geerdeten Schirme dazwischen liegender Kabelstrecken eines Energieversorgungsnetzes als Teil des Datenbusses DB zur Datenübertragung ausgenutzt werden. Durch die Koppelübertrager KU wird der Installationsaufwand und die Topologie des Datenbusses DB des Fernwirksystemes erheblich vereinfacht.

Die Zentralsteuereinheit ZSE dient als sogenannter "Master" zum Betrieb der über den Datenbus DB, die Koppelübertrager KU und die Kabelstrecken NK1,NK2... kettenartig verbundenen sogenannten "Slave" Unterstationen. Am Ausgang der Zentralsteuereinheit ist im Beispiel der Figur 1 beispielhaft eine gemäß der Erfindung in Reihe angeordnete Kette von Unterstationen angeschlossen, die bevorzugt einem linienförmigen Netzbereich N11 zugeordnet ist. In FIG. 1 ist aus Gründen der Übersichtlichkeit lediglich der Beginn der Kette in Form der Unterstationen U1,U2... für die beispielhaften Betriebsmittel NB1,NB2... in den Netzpunkten NP1,NP2... dargestellt.

Erfindungsgemäß speist die Zentralsteuereinheit pro Bearbeitungszyklus, d.h. bevorzugt zyklisch, ein an die letzte Unterstation einer Kette gerichtetes Abfragetelegramm in den Datenbus ein. Dieses wird auf dem eg dorthin von jeder Unterstation in der Kette der Unterstationen empfangen und möglichst unverändert in Richtung auf die letzte Unterstation erneut eingespeist. Nach dem Empfang dieses Abfragetelegrammes durch die letzte Unterstation speist diese nun ein an die Zentralsteuereinheit gerichtetes Antworttelegramm in die Kette ein. Dieses Antworttelegramm kann Statusinformationen der mit der letzten Unterstation verbundenen Betriebsmittel bzw. lediglich Mittel zur Adreßweiterschaltung enthalten. Beim Rücklauf wird dieses Antworttelegramm ebenfalls von jeder Unterstation zunächst empfangen und erneut in den Datenbus eingespeist. Haben sich in der Zwischenzeit Statusänderungen bei den verbundenen Betriebsmitteln einer Unterstation ereignet, so speist diese zusätzlich zu empfangenen Antworttelegrammen ein eigenes, an die Zentralsteuereinheit gerichtetes und die Statusänderungen enthaltendes Antworttelegramm in die Kette ein.

Auf diese Weise wird das Abfragetelegramm auf dem Weg von der Zentralsteuereinheit bis zur letzten Unterstation der Kette von Unterstation zu Unterstation weitergereicht und durchläuft die ganze Kette der Unterstationen. Es wird hiermit auf eine vorteilhaft schnelle Weise die Funktionsfähigkeit der Kette der Unterstationen und der Datenbus überprüft. Ferner wird nach dem Empfang zumindest des Antworttelegrammes der letzten Unterstation in einer Unterstation die zusätzliche Absendung eines eigenen Antworttelegrammes nur dann ausgelöst, wenn in der Zwischenzeit an die Zentralsteuereinheit zu meldende Statusänderungen der angeschlossenen Betriebsmittel eingetreten sind. Es wird somit die Absendung von Antworttelegrammen nur von den Unterstationen veranlaßt, bei denen Statusänderungen eingetreten sind.

In dem Fall, daß vor bzw. während dem aktuellen Abfragezyklus Statusänderungen in keiner der Unterstationen aufgetreten sind, wird folglich nur das in diesem Fall ebenfalls keine Statusinformationen enthaltende Antworttelegramm der letzten Unterstation in Richtung auf die Zentralsteuereinheit von Unterstation zu Unterstation unverändert weitergegeben. Das ordnungsgemäße Eintreffen dieses Antworttelegrammes wird von der Zentralsteuereinheit überwacht und zum Zwecke einer Überprüfung der Funktionsfähigkeit des Fernwirksystemes, des Datenbusses, aller Unterstationen und der damit verbundenen Betriebsmittel empfangen.

In dem Fall, daß vor bzw. während dem aktuellen Abfragezyklus Statusänderungen in einer oder mehreren Unterstationen aufgetreten sind, kommt zu dem Antworttelegramm der letzten Unterstation eine ereignisabhängige Anzahl von Antworttelegrammen weiterer, betroffener Unterstationen hinzu. Diese Antworttelegramme werden am Ende des Abfragezyklusses von der zentralen Steuereinheit empfangen, welche hieraus den aktuellen Betriebszustand des Energieversorgungsnetzes, der Unterstationen und Betriebsmittel rekonstruiert. Dies hat den Vorteil, daß mit Ausnahme der letzten Unterstation, die in jedem Fall ein Antworttelegramm einspeist, weitere Antworttelegramme nur von solchen Unterstationen generiert werden, die Statusveränderungen angeschlossener Betriebsmittel zu melden haben. Die Anzahl der Antworttelegramme pro Bearbeitungszyklus ist somit begrenzt und in vielen Fällen gleich eins, da sich erfahrungsgemäß Statusveränderungen von Betriebsmitteln nur in größeren Zeitabständen ereignen und nur das Antworttelegramm der letzten Unterstation in die Zentralsteuereinheit zurückgelangt.

Eine derartige Gestaltung des erfindungsgemäßen Fernwirksystemes stellt einen optimalen Kompromiß zwischen einer möglichst kurzen Zykluszeit, d.h. schnellen Systemreaktionszeit, einerseits und einer störungsfreien Datenübermittlung andererseits dar. Es befindet sich nämlich zu jedem Zeitpunkt immer nur ein Telegramm, sei es ein Abfrage - oder eines von mehreren möglichen Antworttelegrammen auf dem zwischen zwei Unterstationen liegenden Teil des Datenbusses. Hiermit wird die Gefahr eines Datenverlustes z.B. durch Übersprechen nahezu ausgeschlossen. Ein weiteres Telegramm wird von einer Unterstation nur dann eingespeist, wenn das vorher eingespeiste Telegramm auf Grund der bekannten Telegrammlaufzeiten mit Sicherheit von der in Richtung auf die Zentralsteuereinheit bzw. die letzte Unterstation benachbarten Unterstation empfangen wurde. Andererseits wird aber die Gesamtdauer eines derartigen Telegrammlaufes durch die oben erläuterte, ereignisabhängige Anzahl möglicher Antworttelegramme so begrenzt, daß eine Abfragezyklus in relativ kurzer Zeit abgeschlossen werden kann.

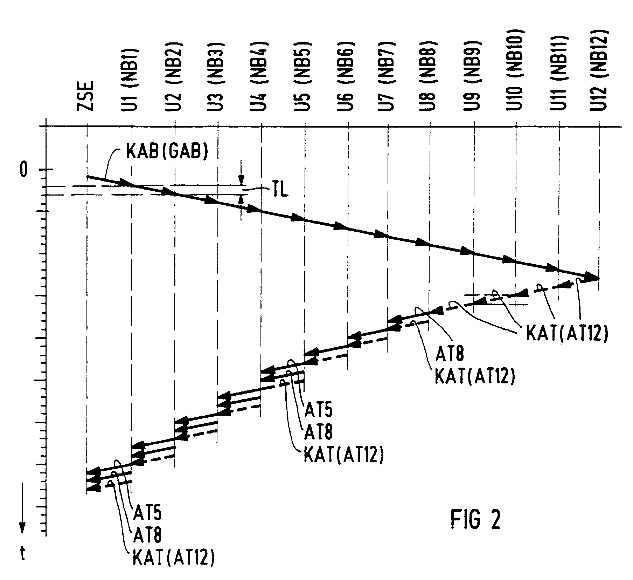

Die Erfindung und weitere vorteilhafte Ausführungsformen derselben werden desweiteren unter Zuhilfenahme der in den Figuren 2 bis 5 dargestellten Orts- und Zeitdiagramme näher erläutert. Dabei sei beispielhaft angenommen, daß 12 in Reihe zusammengeschaltete Unterstationen U1...U12 eine Kette bilden und an jede dieser Unterstationen ein Betriebsmittel NB1... NB12 angeschlossen ist. Dies ist in den Figuren auf der als Wegachse dienenden Horizontalachse aufgetragen. Die nach unten aufgetragene Vertikalachse dient als Zeitachse.

So wird bei dem in Figur 2 dargestellten Orts- und Zeitdiagramm ein Abfragetelegramm, z.B. vom Typ Kurzabfragetelegramm KAB oder vom Typ Kettenabfragetelegramm GAB, von der Zentralsteuereinheit ZSE in den Datenbus eingespeist. Es ist an die letzte Unterstation U12 der Kette gerichtet und wird auf dem Wege dorthin von jeder der vorgelagerten Unterstationen U1...U11 empfangen und in Richtung auf U12 wieder in die Kette eingespeist. Die Übertragung des Abfragetelegrammes KAB(GAB) zwischen zwei Unterstationen ist durch einen zur Zeitachse geneigten Pfeil dargestellt und weist eine mit TL bezeichnete Telegrammlaufzeit auf. Das Abfragetelegramm wird somit durch wiederholtes Empfangen und Senden bis zur letzten Unterstation U12 weitergereicht. Diese speist daraufhin ein an die Zentralsteuereinheit ZSE gerichtetes Antworttelegramm, z.B. vom Typ Kurzantworttelegramm KAT oder vom Typ "eigenes", für die jeweilige Unterstation spezifisches Antworttelegramm AT12 in die Kette ein. Dieses wird dann von den Unterstationen U11,U10,U9 empfangen und wieder in Richtung auf die Zentralsteuereinheit ZSE eingespeist, da bei den Betriebsmitteln NB11,NB10,NB9 dieser Unterstationen keine Statusänderungen aufgetreten sein sollen.

Im Beispiel der Figur 2 sei angenommen, daß eine Statusveränderung in dem mit der Unterstation U8 verbundenen Betriebsmittel NB8 eingetreten ist. Als Folge davon speist die Unterstation nach dem Empfang des Antworttelegrammes KAT(AT12) von der letzten Unterstation U12 zusätzlich zu diesem ein eigenes, an die Zentralsteuereinheit ZSE gerichtetes und die Statusänderungen enthaltendes Antworttelegramm AT8 in die Kette ein. Beide Telegramme AT8 und KAT(AT12) werden von den Unterstationen U7,U6 empfangen und wieder in Richtung auf die Zentralsteuereinheit ZSE eingespeist, da bei den Betriebsmitteln NB7,NB6 dieser Unterstationen ebenfalls keine Statusänderungen aufgetreten sein sollen.

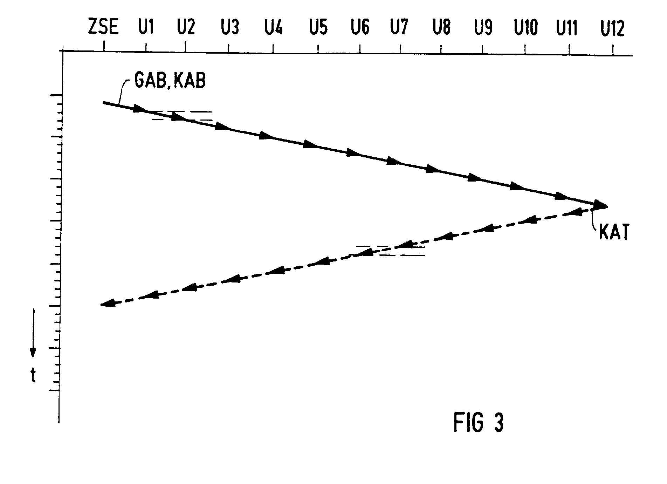

Im Beispiel der Figur 2 sei ferner angenommen, daß eine Statusveränderung in dem mit der Unterstation U5 verbundenen Betriebsmittel NB5 eingetreten ist. Als Folge davon speist die Unterstation U5 nach dem Empfang der Antworttelegramme AT8 und KAT(AT12) von den zurückliegenden Unterstationen U8 und U12 zusätzlich zu diesen ein eigenes, an die Zentralsteuereinheit ZSE gerichtetes und die Statusänderungen enthaltendes Antworttelegramm AT5 in die Kette ein. Die drei Antworttelegramme AT5,AT8 und KAT(AT12) werden von den Unterstationen U4,U3,U3,U2,U1 empfangen und wieder in Richtung auf die Zentralsteuereinheit ZSE eingespeist, da auch bei den Betriebsmitteln dieser Unterstationen keine Statusänderungen aufgetreten sein sollen. Die Zentralsteuereinheit ZSE empfängt am Ende des in Figur 3 dargestellten Abfragezyklusses beispielhaft drei Antworttelegramme, und kann hiermit die durch Übernahme der darin enthaltenen Statusänderungen die Information über den aktuellen Betriebszustand des Energieübertragungsnetzes und deren Betriebsmittel aktualisieren.

Der Vorteil der Erfindung wird an diesem Beispiel deutlich. Er wird darin gesehen, daß ereignisabhängig nur die unbedingt notwendige Anzahl an Antworttelegrammen generiert wird. Bei Nichtvorliegen von Statusänderungen bei an Unterstationen angeschlossenen Betriebsmitteln ist quasi nur die letzte Unterstation einer Kette berechtigt, ein Antworttelegramm, in diesem Fall bevorzugt vom Typ Kurzantworttelegramm, an die Zentralsteuereinheit zu senden. Alle anderen Unterstationen dürfen selbst nur dann ein eigenes Antworttelegramm absenden, wenn bei den angeschlossenen Betriebsmitteln Statusänderungen eingetreten sind. Ein Abfragezyklus wie in Figur 2 dargestellt ist somit so kurz wie möglich, so daß kurze Zykluszeiten erreicht werden.

Ein weiterer Vorteil wird darin gesehen, daß der "Vorlauf" eines Abfragetelegrammes KAB(GAB) vom "Rücklauf" des Antworttelegrammes KAT(AT12) der letzten Unterstation U12 und möglicher weiterer Antworttelegramme AT11... AT1 von Unterstationen U11...U1, bei deren Betriebsmitteln Statusänderungen eingetreten sind, getrennt ist. Ferner ist vorteilhaft gewährleistet, daß sowohl in Vorlauf- als auch in Rücklaufrichtung immer nur ein Telegramm, ein Abfrage - oder ein Antworttelegramm beliebigen Typs, zwischen zwei Unterstationen übermittelt wird. Hierdurch ist ein Höchstmaß an Datensicherheit gewährleistet, so daß Informationsverluste z.B. bedingt durch sogenanntes Übersprechen nahezu vollständig vermieden werden. Die erfindungsgemäße Vorrichtung stellt somit einen optimalen Kompromiß zwischen Schnelligkeit der Telegrammübermittlung einerseits, d.h. der Schnelligkeit der Übermittlung von Statusänderungen von den betroffenen Unterstationen zur Zentralsteuereinheit, und hoher Übermittlungssicherheit andererseits dar.

Bei dem im Beispiel der Figur 2 dargestellten Orts- und Zeitdiagramm kann von der Zentralsteuereinheit ZSE ein Abfragetelegramm vom Typ Kurzabfragetelegramm KAB eingespeist werden, wenn mindestens in dem vorangegangenen Abfragezyklus von keiner der Unterstationen U12...U1 ein Änderungen von Statusinformationen verbundener Betriebsmittel enthaltendes Antworttelegramm AT12...AT1 an die Zentralsteuereinheit ZSE gesendet wurden. Ein Kurzabfragetelgramm enthält bevorzugt im wesentlichen nur Bereiche, in denen Adressen eintragbar sind. Dies sind insbesondere die Adresse der letzten Unterstation in der Kette, die Adresse der aktuellen Unterstation, welche das Kurzabfragetelgramm gerade empfangen hat, und die Adresse der in der Kette auf diese Unterstation folgende Unterstation, d.h. an die das Kurzabfragetelgramm abgesendet werden wird. Ein derartiger Zyklus kann Kurzabfragezyklus genannt werden.

Bei dem im Beispiel der Figur 2 dargestellten Orts- und Zeitdiagramm kann von der Zentralsteuereinheit ZSE auch ein Abfragetelegramm vom Typ Kettenabfragetelgramm GAB insbesondere dann eingespeist werden, wenn in dem vorangegangenen Abfragezyklus von mindestens einer der Unterstationen U12... U1 ein Statusinformationen enthaltendes Antworttelegramm AT12...AT1 an die Zentralsteuereinheit ZSE gesendet wurden. Ein derartiges Kettenabfragetelgramm GAB enthält gegenüber einem Kurzabfragetelegramm KAB zusätzlich ein Feld, in dem für jede der in einer Kette enthaltenen Unterstationen ein sogenanntes Quittungsbit vorgesehen ist. Ein solches ist für eine Unterstation aktiviert, wenn die Zentralsteuereinheit im vorangegangenen Abfragezyklus von dieser Unterstation ein Statusinformationen enthaltendes Antworttelegramm erhalten hat. Es signalisiert der entsprechenden Unterstation den positiven Erhalt des Antworttelegrammes durch die Zentralsteuereinheit, so daß eine möglicherweise wiederholte Absendung des Antworttelegrammes durch die Unterstation nicht notwendig ist.

Bei dem im Beispiel der Figur 2 dargestellten Orts- und Zeitdiagramm kann von der letzten Unterstation 12 als Antwort auf ein Abfragetelegramm KAB(GAB) der Zentralsteuereinheit ZSE ein Antworttelegramm vom Typ Kurzantworttelegramm KAT eingespeist werden, wenn die letzte Unterstationen U12 selbst kein Status informationen enthaltendes Antworttelegramm AT12 an die Zentralsteuereinheit ZSE abzusenden hat. Das Kurzantworttelgramm enthält im wesentlichen nur Bereiche, in denen Adressen eintragbar sind, insbesondere die Adresse der Zentralsteuereinheit ZSE an Anfang der Kette, die Adresse der aktuellen Unterstation, welche das Kurzantworttelegramm gerade empfangen hat, und die Adresse der in der Kette auf diese Unterstation folgende Unterstation, d.h. an die das Kurzantworttelegramm abgesendet werden wird. In Figur 2 ist dieses Kurzantworttelegramm KAT der letzten Unterstation in strichlierter Linie dargestellt. Selbstverständlich kann die letzten Unterstation U12 bei Vorliegen von Statusänderungen bei dem verbundenen Betriebsmittel NB12 an Stelle des Kurzantworttelegrammes KAT ein eigenes, an die Zentralsteuereinheit ZSE gerichtetes und die Statusänderungen enthaltendes vollwertiges Antworttelegramm AT12 in die Kette einspeisen.

Gemäß einer weiteren, im Beispiel der Figur 2 bereits dargestellten Ausführung des erfindungsgemäßen Fernwirksystemes ist es vorteilhaft, wenn nach Absendung des Antworttelegrammes vom Typ KAT oder AT12 der letzten Unterstation U12 die weiteren Unterstationen U11,U10...U1 bei Vorliegen von Statusänderungen bei den verbundenen Betriebsmitteln NB11,NB10...NB1 das eigene, an die Zentralsteuereinheit ZSE gerichtet Antworttelegramm AT11...AT1 jeweils zuerst und erst danach die empfangenen Antworttelegramme AT12,AT11... zurückliegender Unterstationen U12,U11...U1 möglichst in der Reihenfolge des vorangegangenen Empfangs wieder in die Kette einspeisen. So speist beispielsweise in Figur 2 die Unterstation U5 erst das eigene Antworttelegramm AT5, dann das zuerst erhaltenen Antworttelegramm AT8 von Unterstation U8 und schließlich das zuletzt erhaltene Antworttelegramm KAT(AT12) von Unterstation U12 an die Zentralsteuereinheit ZSE gerichtet in die Kette ein. Dies hat den Vorteil, daß die Zentralsteuereinheit Antworttelegramm, soweit vorhanden, in einer der Reihenfolge der Unterstationen der Kette U1..U12 entsprechenden Reihenfolge erhält. Hierdurch wird die interne Verarbeitung erleichtert. Ferner wird auch die Überwachung von Ablaufzeiten in der Zentralsteuereinheit ZSE vereinfacht. So überwacht die Zentralsteuereinheit das zeitgerechte Eintreffen des Antworttelegrammes von der letzten Unterstation, da zumindest dieses in jedem Fall am Ende eines Abfragezyklusses in der Zentralsteuereinheit eintreffen muß.

Im Beispiel der Figur 3 ist ein Kurzabfragezyklus dargestellt. Die Zentralsteuereinheit speist ein Abfragetelegramm bevorzugt vom Typ Kurzabfragetelegramm KAB ein. Da sich bei keiner Unterstation Statusänderungen bei angeschlossenen Betriebsmitteln ereignet haben, läuft erfindungsgemäß nur das von der Unterstation U12 generiert Kurzantworttelegramm KAT in der Zentralsteuereinheit ein. Trifft dies innerhalb einer durch die bekannten Telegrammlaufzeiten von Unterstation zu Unterstation genau bestimmbaren Überwachungszeit ein, so ist der Datenbus und somit das gesamte Fernwirksystem einschließlich angeschlossener Betriebsmittel zur Steuerung des Energieversorgungsnetzes in Ordnung. An einen derartigen Abfragezyklus schließen sich vorteilhaft solange weitere Kurzabfragezyklen an, bis während eines Abfragezyklusses Antworttelegramme von anderen als der letzten Unterstation generiert werden. Hieran anschließend wird von der Zentralsteuereinheit zumindest ein Kettenabfragetelegramm mit Quittungsbits eingespeist, wie dies bereits erläutert wurde.

Insbesondere für das Fall eines Systemanlaufes ist es vorteilhaft, wenn das an die letzte Unterstation U12 gerichtete Abfragetelegramm ebenfalls ein Kettenabfragetelegramm GAB ist, welches vorteilhaft zusätzlich eine Kennung z.B. in Form eines Anlaufbits enthält. Hierdurch wird nicht nur die letzte Unterstation U12, sondern jeweils nach dem Empfang von Antworttelegrammen AT12,AT11... zurückliegender Unterstationen U12,U11...jede weitere Unterstation U11...U1 veranlaßt, ein an die Zentralsteuereinheit ZSE gerichtetes, zumindest den aktuellen Status der jeweils verbundenen Betriebsmittel NB12,NB11...NB1 enthaltendes Antworttelegramm AT12...AT1 einzuspeisen.

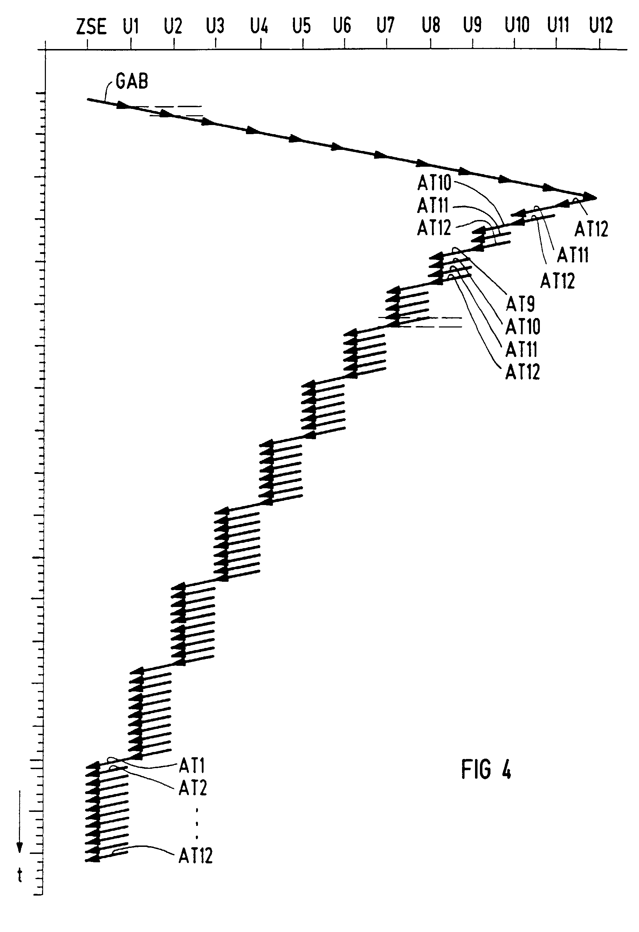

Ein derartiger Fall ist im Beispiel der Figur 4 dargestellt. Das Kettenabfragetelegramm GAB löst in jeder Unterstation die Generierung eines eigenen Antworttelegrammes aus. Am Ende eines derartigen Abfragezyklusses übergibt somit die Unterstation U1 ein vollständiges Paket von Antworttelegrammen AT1 ...AT12 aller Unterstationen U1...U12 an die Zentralsteuereinheit. Diese kann somit den Status des Energieübertragungsnetzes rekonstruieren und dabei gleichzeitig die ordnungsgemaße Funktion des Fernwirksystemes überprüfen. Auch in diesem Fall ist es vorteilhaft, wenn die Zentralsteuereinheit ZSE nach dem Erhalt der den aktuellen Status aller verbundenen Betriebsmittel enthaltenden Antworttelegramme von jeder Unterstation wiederum ein an die letzte Unterstation U12 gerichtetes Kettenabfragetelegramm GAB einspeist, in dem jeweils ein an jede der Unterstationen U1...U12 gerichtetes Quittierungsbit aktiviert ist.

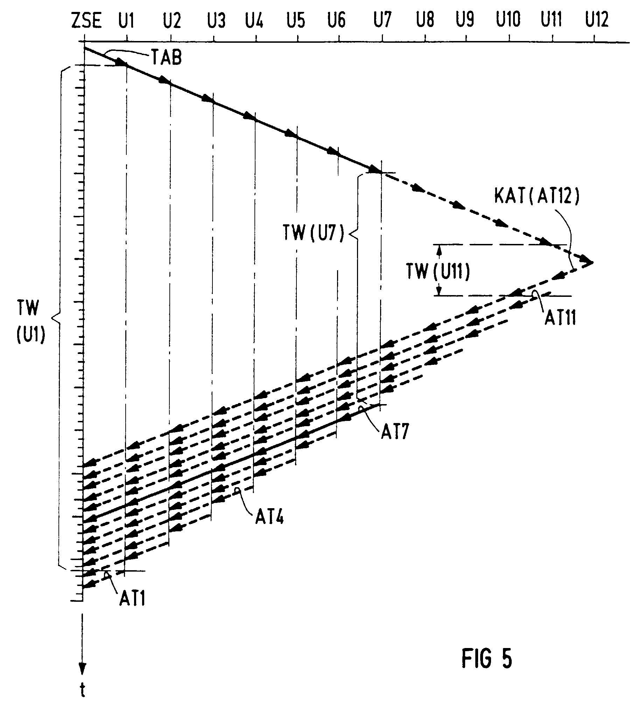

Ein weiterer Betriebszustand des erfindungsgemäßen Fernwirksystemes wird am Beispiel der Figur 5 erläutert. In diesem Fall wird von der Zentralsteuereinheit ein Abfragetelegramm vom Typ Testabfragetelegramm TAB in die Kette eingespeist, da die Zentralsteuereinheit ZSE am Ende des vorangegangenen Abfragezyklusses überhaupt kein Antworttelegramm empfangen hat. Dies ist ein Zeichen dafür, daß entweder der Datenbus mechanisch beschädigt oder einer der Unterstationen gestört ist. Es besteht nun die Aufgabe, die letzte noch betriebsbereite, also unmittelbar vor der Störung liegende Unterstation zu identifizieren. Zu diesem Zweck wird das Testabfragetelegramm TAB von der Zentralsteuereinheit eingespeist. Hierdurch veranlaßt wird von derjenigen Unterstation U1,U2... der Kette ein eigenes, an die Zentralsteuereinheit gerichtetes Antworttelegramm AT1,AT2... selbsttätig in die Kette eingespeist, welche innerhalb einer von der Lace der jeweiligen Unterstation in der Kette abhängigen Sperrzeit TW1,TW2... kein Antworttelegramm von einer zurückliegenden Unterstation U12,U11... empfangen wurde. Dies ist dann die letzte noch erreichbare Unterstation in der Kette und liegt folglich unmittelbar vor der Fehlerstelle. Ein Testabfragetelegramm berechtigt somit eine andere als die letzte Unterstation der Kette unter den oben dargestellten Randbedingungen selbsttätig ein eigenes Antworttelegramm zu senden.

Dies wird anhand des in Figur 5 dargestellten Beispiels näher erläutert. Dabei sei angenommen, daß wegen der Störung das Testabfragetelegramm TAB trotz Einspeisung von der Unterstation U7 in Richtung auf die letzte Unterstation U12 von der Unterstation U8 nicht mehr empfangen werden kann. In der Unterstation U7 beginnt mit dieser Einspeisung eine Sendesperrzeit TW(U7) zu laufen. Diese ist aufgrund der Lage der Unterstation U7 in der Kette so lang, daß bei einer ungestörten Weiterübertragung des Testabfragetelegrammes TAB von den Unterstationen U8...U12 vor deren Ablauf eines der Antworttelegramme KAT,AT11...AT8 empfangen werden müßte. Da dies gemäß dem vorliegenden Beispiel wegen der Störung nicht möglich ist, speist die Unterstation U7 ein eigenes Antworttelegramm z.B. vom Typ AT7 an die Zentralsteuereinheit gerichtet in die Kette ein. Dieses wird von den Unterstationen U6...U1 empfangen, bevor deren Sendesperrzeiten TW(U6)...TW(U1) abgelaufen sind. Hierdurch wird die Einspeisung von eigenen Antworttelegrammen AT6...AT1 dieser Unterstationen unterdrückt. In dem vorliegenden Beispiel gelangt folglich nur das Antworttelegramm der Unterstation U7, welche als letzte erreichbare Station unmittelbar vor der angenommenen Fehlerstelle liegt, in die Zentralsteuereinheit, welche daraufhin die Fehlerstelle lokalisieren kann.

An der Darstellung in Figur 5 ist zu erkennen, daß die Sendesperrzeiten TW(U11)...TW(U7)...TW(U1)der Unterstationen in Richtung auf die Zentralsteuereinheit ZSE zwischen zwei Unterstationen jeweils um einen möglichst übereinstimmenden Betrag länger werden. Hierdurch ist sichergestellt, daß nur die letzte noch erreichbare Unterstation in der Kette, welche also keine Antworttelegramme von weiter in Richtung auf die letzte Unterstation liegenden Unterstationen mehr erhält, ein eigenes Antworttelegramm absendet. Hiermit ist in sicherer und schneller Weise eine Störung im Datenbus bzw. einer der Unterstationen der Kette lokalisierbar.

## Patentansprüche

1. Fernwirksystem zur Überwachung von Betriebsmitteln (NB1...NB12) eines Energieversorgungsnetzes (N11), mit
a) einem Datenbus (DB), der aus einer Kette von Unterstationen (U1...U12) besteht, die jeweils mit mindestens einem Betriebsmittel (NB1...) verbundenen sind, die in Netzpunkten (NP1..) an geerdeten Kabelschirmen (KE) benachbarter, zur Energieübertragung dienender Kabelstrecken (NK1..) angeschlossen sind und die eine Dateneinspeisung bzw. Datenauskopplung in bzw. aus den Erdstromkreisen (ES1,ES2) der benachbarten Kabelstrecken (NK1,NK2) bewirken, mit
b) einer Zentralsteuereinheit (ZSE), die pro Bearbeitungszyklus ein Abfragetelegramm (GAB,KAT,TAB) in den Datenbus (DB) einspeist, wobei
c) das Abfragetelegramm (GAB,KAT,TAB) an die letzte Unterstation (U12) der Kette gerichtet ist, von jeder Unterstation (U1,U2...) empfangen und in Richtung auf die letzte Unterstation (U12) der Kette erneut eingespeist wird,
d) die letzte Unterstation (U12) nach Empfang des Abfragetelegrammes (GAB,KAB,TAB) ein an die Zentralsteuereinheit (ZSE) gerichtetes Antworttelegramm (KAT;AT12) in die Kette einspeist, und
e) jede weitere Unterstation (U11,U10...U1) nach Empfang von mindestens einem Antworttelegramm (KAT;AT12,AT11...) zurückliegender Unterstationen (U12,U11...U1) bei Vorliegen von Statusänderungen bei verbundenen Betriebsmitteln (NB11 ...NB1) zusätzlich zu dem mindestens einen empfangenen Antworttelegramm ein eigenes, an die Zentralsteuereinheit (ZSE) gerichtetes und die Statusänderungen enthaltendes Antworttelegramm (AT11...AT1) in die Kette einspeist.

2. Vorrichtung nach Anspruch 1, wobei das von der letzten Unterstation (U12) an die Zentralsteuereinheit (ZSE) gerichtete Antworttelegramm (AT12) entweder aktuelle Statusänderungen verbundener Betriebsmittel (NB12) enthält oder bei Nichtvorliegen von Statusänderungen ein Kurzantworttelegramm (KAT) ist, dessen Eintreffen von der Zentralsteuereinheit (ZSE) überwacht wird (Fig.3,4).

3. Vorrichtung nach Anspruch 1 oder 2, wobei das von der Zentralsteuereinheit (ZSE) an die letzte Unterstation (U12) gerichtete Abfragetelegramm ein Kurzabfragetelegramm (KAB) ist, wenn auf ein Abfragetelegramm (GAB) von keiner Unterstation ein, Statusänderungen bei verbundenen Betriebsmitteln (NB11, NB10...NB1) enthaltendes Antworttelegramm (AT12...AT1) an die Zentralsteuereinheit (ZSE) gerichtet wurde (Fig.3,4).

4. Vorrichtung nach Anspruch 1, wobei das an die letzte Unterstation (U12) gerichtete Abfragetelegramm ein Kettenabfragetelegramm (GAB) ist, wodurch die letzte Unterstation (U12) und nach Empfang von Antworttelegrammen (AT12,AT11...) zurückliegender Unterstationen (U12,U11...) jede weitere Unterstation (U11...U1) veranlaßt wird, ein an die Zentralsteuereinheit (ZSE) gerichtetes, zumindest den aktuellen Status der jeweils verbundenen Betriebsmittel (NB12,NB11...NB1) enthaltendes Antworttelegramm (AT12...AT1) einzuspeisen (Fig.2).

5. Vorrichtung nach Anspruch 1, wobei das Abfragetelegramm ein Testabfragetelegramm (TAB) ist, wenn die Zentralsteuereinheit (ZSE) kein Antworttelegramm (KAT;AT12...) empfangen hat, worauf von einer Unterstation (U1...) ein eigenes, an die Zentralsteuereinheit gerichtetes Antworttelegramm (AT1 ...) in die Kette eingespeist wird, wenn innerhalb einer von der Lage der jeweiligen Unterstation in der Kette abhängigen Sperrzeit (TW1...) kein Antworttelegramm von einer zurückliegenden Unterstation (U12...) empfangen wurde.

## Claims

1. Telecontrol system for monitoring operational devices (NB1...NB12) of a power supply system (N11), having
a) a databus (DB) which comprises a chain of substations (U1...U12) which are respectively connected to at least one operational device (NB1...), which are connected at system points (NP1..) to earthed cable shields (KE) of neighbouring cable sections (NK1...) serving the purpose of power transmission, and which feed data into, or tap data from, the earth-current circuits (ES1, ES2) of the neighbouring cable sections (NK1, NK2), having
b) a central control unit (ZSE) which feeds an interrogation message (GAB, KAB, TAB) into the databus (DB) per processing cycle, it being the case that
c) the interrogation message (GAB, KAB, TAB) is addressed to the last substation (U12) of the chain, received by each substation (U1, U2...) and fed in anew in the direction of the last substation (U12) of the chain,
d) after receiving the interrogation message (GAB, KAB, TAB), the last substation (U12) feeds into the chain a response message (KAT; AT12) addressed to the central control unit (ZSE), and
e) given the presence of changes in status in the case of connected operational devices (NB11...NB1), after receiving at least one response message (KAT; AT12, AT11...) of earlier substations (U12, U11...U1), each further substation (U11, U10...U1) feeds into the chain, in addition to the at least one received response message, a dedicated response message (AT11..AT1) addressed to the central control unit (ZSE) and containing the changes in status.

2. Device according to Claim 1, in which the response message (AT12) addressed to the central control unit (ZSE) by the last substation (U12) either contains current changes in status of connected operational devices (NB12) or, given the absence of changes in status, is an abbreviated response message (KAT), whose receipt is monitored by the central control unit (ZSE) (Figures 3, 4).

3. Device according to Claim 1 or 2, in which the interrogation message addressed by the central control unit (ZSE) to the last substation (U12) is an abbreviated interrogation message (KAB) if, in response to an interrogation message (GAB), no substation has addressed to the central control unit (ZSE) a response message (AT12...AT1) containing changes in status in the case of connected operational devices (NB11, NB10...NB1) (Figures 3, 4).

4. Device according to Claim 1, in which the interrogation message addressed to the last substation (U12) is a chain interrogation message (GAB), in accordance with which the last substation (U12) and, after receiving response messages (AT12, AT11...) of earlier substations (U12, U11...) , each further substation (U11...U1) is caused to feed in a response message (AT12...AT1) which is addressed to the central control unit (ZSE) and contains at least the current status of the respectively connected operational devices (NB12, NB11...NB1) (Figure 2).

5. Device according to Claim 1, in which the response message is a test interrogation message (TAB) if the central control unit (ZSE) has received no response message (KAT; AT12...), whereupon a substation (U1...) feeds into the chain a dedicated response message (AT1...) addressed to the central control unit if, within a block time (TW1...), which depends on the position of the respective substation in the chain, no response message has been received from an earlier substation (U12...).

## Revendications

1. Système de télécommande pour le contrôle de moyens d'exploitation (NB1 à NB12) d'un réseau d'alimentation en énergie (N11), comportant
a) un bus de données (DB) qui est constitué d'une chaîne de sous-stations (U1 à U12), qui sont reliées chacune à au moins un moyen d'exploitation (NB1, ...), qui sont raccordées en des points de réseau (NP1, ...) à des blindages de câbles mis à la masse (KE) de tronçons de câbles (NK1, ...) voisins et servant au transport d'énergie et qui entrent des données dans les circuits de masse (ES1, ES2) des tronçons de câbles (NK1, NK2) voisins ou les en fait sortir,
b) une unité de commande centrale (ZSE) qui envoie dans le bus de données (DB) un télégramme d'interrogation (GAB, KAT, TAB) par cycle de traitement,
dans lequel
c) le télégramme d'interrogation (GAB, KAT, TAB) est adressé à la dernière sous-station (U12) de la chaîne, est reçu par chaque sous-station (U1, U2, ...) et est renvoyé en direction de la dernière sous-station (U12) de la chaîne,
d) après avoir reçu le télégramme d'interrogation (GAB, KAB, TAB), la dernière sous-station (U12) envoie dans la chaîne un télégramme de réponse (KAT ; AT12) adressé à l'unité de commande centrale (ZSE), et
e) après avoir reçu au moins un télégramme de réponse (KAT ; AT12, AT11, ...) de sous-stations (U12, U11 à U1) déjà traversées, chaque autre sous-station (U11, U10 à U1) envoie dans la chaîne, si des modifications d'état ont eu lieu dans des moyens d'exploitation (NB11 à NB1) raccordés, en plus du ou des télégrammes de réponse reçus, un télégramme de réponse particulier (AT11 à AT1) adressé à l'unité de commande centrale (ZSE) et contenant les modifications d'état.

2. Dispositif selon la revendication 1, dans lequel le télégramme de réponse (AT12) adressé par la dernière sous-station (U12) à l'unité de commande centrale (ZSE) contient soit des modifications d'état actuelles de moyens d'exploitation (NB12) reliés soit, s'il n'y a pas eu de modification d'état, un télégramme de réponse court (KAT) dont l'arrivée est surveillée par l'unité de commande centrale (ZSE) (figures 3 et 4).

3. Dispositif selon la revendication 1 ou 2, dans lequel le télégramme d'interrogation adressé par l'unité de commande centrale (ZSE) à la dernière sous-station (U12) est un télégramme d'interrogation court (KAB) lorsque, en réaction à un télégramme d'interrogation (GAB), aucune sous-station n'a adressé à l'unité de commande centrale (ZSE) un télégramme de réponse (AT12 à AT1) contenant des modifications d'état dans des moyens d'exploitation (NB11, NB10 à NB1) reliés (figures 3 et 4).

4. Dispositif selon la revendication 1, dans lequel le télégramme d'interrogation adressé à la dernière sous-station (U12) est un télégramme d'interrogation de chaîne (GAB) qui fait que la dernière sous-station (U12) et, après réception de télégrammes de réponse (AT12, AT11, ...) de sous-stations déjà traversées (U12, U11, ...), chaque autre sous-station (U11 à U1) doivent envoyer un télégramme de réponse (AT12 à AT1) adressé à l'unité de commande centrale (ZSE) et contenant au moins l'état actuel des moyens d'exploitation (NB12, NB11 à NB1) reliés (figure 2).

5. Dispositif selon la revendication 1, dans lequel, lorsque l'unité de commande centrale (ZSE) n'a reçu aucun télégramme de réponse (KAT ; AT12, ...), le télégramme d'interrogation est un télégramme d'interrogation de test (TAB) à la suite duquel un télégramme de réponse particulier (AT1, ...) adressé à l'unité de commande centrale est envoyé dans la chaîne par une sous-station (U1, ... ) si, pendant un temps de blocage (TW1, ...) dépendant de la position de ladite sous-station dans la chaîne, aucun télégramme de réponse d'une sous-station (U12, ... ) déjà traversée n'a été reçu.
